# EUROPEAN PATENT SPECIFICATION

(11) **EP 0 693 822 B1**
(45) Date of publication and mention of the grant of the patent: **03.03.1999**
(21) Application number: 95304363.5
(22) Date of filing: 21.06.1995
(51) Int. Cl.: H02P 7/68

(54) **Controller for electric motors**
Steuerung für elektrische Motoren
Commande de moteurs électriques

(30) Priority: 22.06.1994 GB 9412486
(43) Date of publication of application: 24.01.1996
(73) Proprietor: SEVCON LIMITED, Gateshead, Tyne & Wear NE11 0QA (GB)
(72) Inventor: Hodge, Alan, Seaburn Dene, Sunderland SR6 8LJ (GB)
(74) Representative: Moir, Michael Christopher

(56) References cited:
- WO-A-81/00795
- WO-A-81/03249
- WO-A-91/15379
- DE-A- 2 656 762
- US-A- 4 110 668
- US-A- 4 471 273

## Description

This invention relates to controllers for electric motors.

The invention relates particularly to chopper controllers for independently controlling two motors, for example two traction motors or the traction motor and hydraulic pump motor of a fork lift truck.

The invention is concerned particularly with high frequency chopper controllers for electric motors, of the kind comprising a main power switch, such as a transistor switch, connected in series between the motor and the battery or other power source, and means for turning the main power switch on and off and for controlling the duty cycle, i.e. the ratio of the on-time to the cycle time of the main power switch in each cycle, thereby to control the mean voltage applied to the motor.

With chopper controllers operating at high frequency, the inductance of the leads from the battery, and the battery itself, has a significant effect. The energy stored in the lead inductance on turning off the main power switch can cause damaging voltage spikes. It is therefore usual to provide a bank of capacitors located close to the main power switch to absorb this energy. When the main power switch is turned off, the battery current continues flowing into the capacitor bank, increasing its charge. During the periods when the main power switch is on, current flows from the capacitor bank through the motor, tending to discharge the capacitor bank. The mean charge on the capacitor bank remains constant, but a relatively high current flows into and out of the capacitor bank during each cycle of operation of the main power switch. The capacitor bank has to be large enough to handle this high ripple current without overheating.

WO81/03249 describes an electrically operated dual-motor drive system for industrial vehicles which include first and second variable duty cycle power switches connecting the motors independently to a power source. A selectively operated shunt switch connects the power transistors in parallel for high fork, lower speed operating conditions.

It is an object of this invention to provide an improved controller for independently controlling two electric motors.

According to this invention, there is provided a high frequency chopper controller for independently controlling two electric motors comprising a separate main power switch for each motor, each main power switch being connected in series between the associated motor and an electric power source, control means for turning each main power switch on and off and for controlling the duty cycle of each main power switch thereby to control the mean voltage applied to the associated motor, in which the controller includes a single capacitor bank connected in use across the source characterised in that the control means is arranged to operate the main power switches so that, if the sum of the duty cycles of the two main power switches is less than or equal to 100%, the two main power switches are not on simultaneously at any time, and, if the sum of the duty cycles of the main power switches is greater than or equal to 100%, the two main power switches are not off simultaneously at any time, so as to reduce or minimise the ripple current in the capacitor bank.

In one form of the invention, the control means is arranged to turn on one of the main power switches in each cycle at the same instant that the other main power switch is turned off.

Suitably, the control means is arranged to turn on the said one of the main power switches at a predetermined frequency, the duty cycle of the main power switch being controlled by controlling the instants at which it is turned off, whilst the other main power switch is turned off at the said predetermined frequency, the duty cycle of the other main power switch being controlled by controlling the instants at which it is turned on.

It has been found that, under any conditions of operation of the controller of the invention, the maximum ripple current in the capacitor bank is substantially no greater than would result from operating one motor only. This means that the common capacitor bank for the two controllers need have a capacitance only as great as that required for a single motor controller.

Accordingly, in accordance with a preferred aspect of the invention, the capacitor bank has a capacitance substantially equal to that required for a capacitor bank operating with only one of the motors, or with that one of the motors which requires a capacitor bank having the greater capacitance.

Advantageously, the main power switches, control means and capacitor bank are mounted in a common housing.

The invention will now be described, by way of example, with reference to the accompanying drawings, in which:

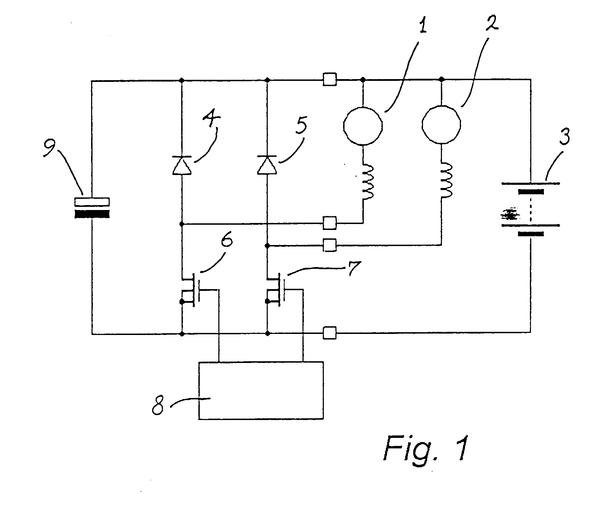

Figure 1 shows the power circuit of a controller in accordance with the present invention, for independently controlling two DC motors,
Figures 2 and 3 illustrate the switching sequences of the main power switches of the controller,
Figure 4 is a diagrammatic plan view of the controller, with the top cover removed, and
Figure 5 is a diagrammatic end elevation of the controller, with an end cover removed.

Referring to the drawings, a controller is provided for two DC motors 1 and 2 supplied from a battery 3. Main power switches 6 and 7 are connected in series between the battery 3 and motors 1 and 2 respectively. Freewheel diodes 4 and 5 are connected across the two motors. Each main power switch may, for example, consist of one or more MOSFETs (metal-oxide-semiconductor field effect transistors). A suitable control circuit, for example a microprocessor control circuit 8, is provided to turn the switches 6 and 7 on and off, to control the mean voltages applied to the two motors 1 and 2. A bank of capacitors 9 is connected across the battery 3.

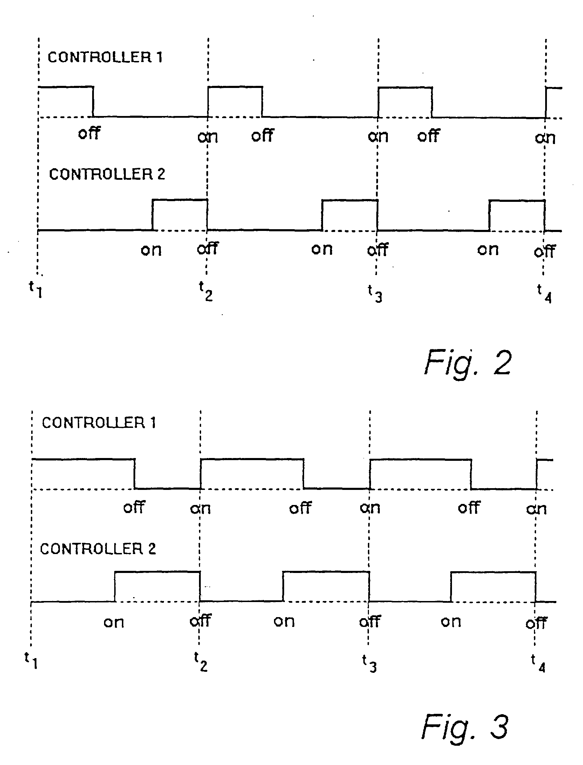

To control the mean voltage applied to the motor 1, the main power switch 6 is turned on by the control circuit 8 at regularly spaced intervals, as shown by t₁, t₂, t₃ and t₄ in Figures 2 and 3, and is turned off, in each cycle, after a time determined by the control circuit 8. To control the mean voltage applied to the motor 2, the main power switch 7 is turned off at regularly spaced intervals, and is turned on, in each cycle, at a time before the next turn-off point which is determined by the control circuit 8.

When both motors 1 and 2 are running simultaneously, the times t₁, t₂, t₃ and t₄ at which the switch 7 is turned off coincide with the times at which the switch 6 is turned on. The switches 6 and 7 associated with the two motors 1 and 2 are therefore effectively operated in antiphase.

When the main power switch 6 is conducting, current flows from the battery 3 through the motor 1 and switch 6. When the switch 6 is turned off, the motor current circulates through the freewheel diode 4. The current in the battery leads, maintained by the inductance of the battery and battery leads, flows into the capacitor bank 9, increasing the charge on the capacitor. When switch 6 is turned on again, the capacitor bank 9 tends to discharge, current flowing from the capacitor bank through the motor 1 and switch 6. The mean charge on the capacitor bank 9 therefore remains constant, but a relatively high current flows into and out of the capacitor bank 9 during each cycle of operation of the main power switch 6. The magnitude of this ripple current depends on the motor current and the duty cycle of the switch 6, i.e. the ratio of the on-time to the cycle time of the switch.

Similarly, when main power switch 7 is operated to supply power to the motor 2, a ripple current flows through the capacitor bank 9, the magnitude of which depends on the motor current and the duty cycle of the switch 7.

When both motors 1 and 2 are running simultaneously, with the sum of the duty cycles of the two main power switches less than 100%, then the operation of the main power switches 6 and 7 in antiphase means that at no point in each cycle are both switches conducting simultaneously. This situation is illustrated in Figure 2. If the sum of the duty cycles of the two main power switches 6 and 7 is greater than 100%, as illustrated in Figure 3, operation of the main power switches in antiphase means that at no point in the cycle are both main power switches simultaneously non-conducting.

It has been found that, under any conditions, the maximum ripple current in the capacitor bank is substantially no greater than would result from operating one motor only. This means that the common capacitor bank 9 for the two controllers need have a capacitance only as great as that required for a single motor controller.

Synchronising the turning off of the main power switch 7 with the turning on of the main power switch 6 provides a simple and convenient way of ensuring that the two power switches are at no time simultaneously conducting when the sum of the duty cycle is less than 100% and are at no time simultaneously non-conducting when the sum of the duty cycles is greater than 100%. However, this could also be achieved by other switching sequences of the main power switches.

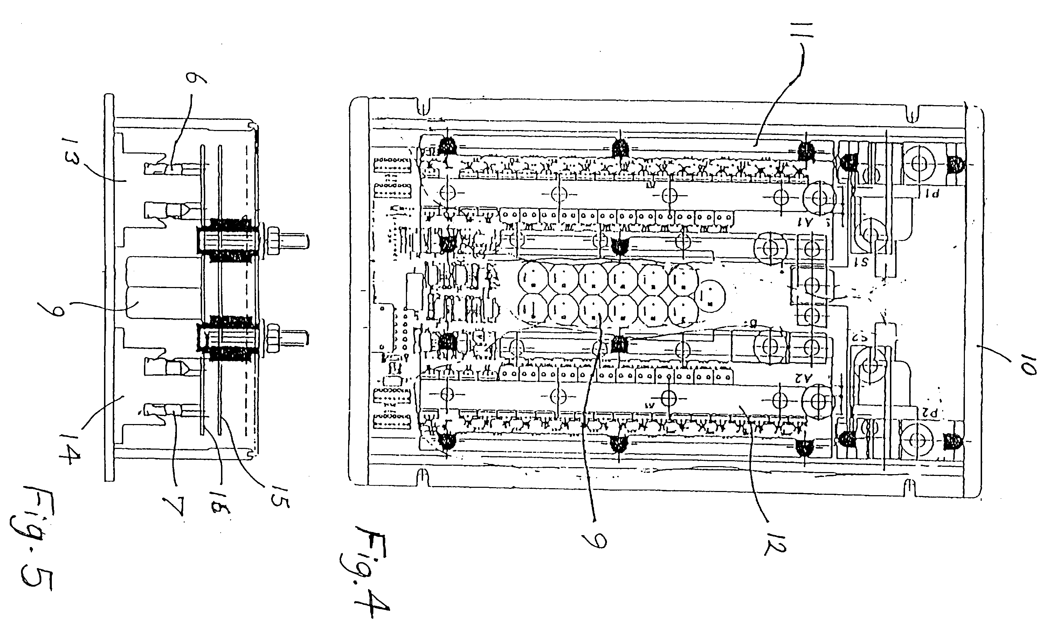

Figures 4 and 5 illustrate the physical layout of the controller. A housing 10 contains components of the power circuits 11 and 12 for the two motors 1 and 2, including arrays of MOSFETs forming the main power switches 6 and 7, and freewheel diodes 4 and 5. Components of the microprocessor control circuit 8 are mounted on a printed circuit board 15. The MOSFETs and freewheel diodes are mounted on heatsinks 13 and 14 and connected to a printed circuit board 16. The capacitors of the common capacitor bank 9 are mounted on the printed circuit board 16 and arranged between the power circuits 11 and 12. This provides a compact arrangement for the controller.

The invention therefore avoids the disadvantage, in terms of cost and space requirements, of providing a separate capacitor bank for each power circuit, or a common capacitor bank having twice the capacitance of that required for a single motor controller.

## Claims

1. A high frequency chopper controller for independently controlling two electric motors (1,2), comprising a separate main power switch (6,7) for each motor, each main power switch being connected in series between the associated motor and an electric power source (3), control means (8) for turning each main power switch on and off and for controlling the duty cycle of each main power switch thereby to control the mean voltage applied to the associated motor, in which the controller includes a single capacitor bank (9) connected in use across the source (3) characterised in that the control means (8) is arranged to operate the main power switches (6,7) so that, if the sum of the duty cycles of the two main power switches is less than or equal to 100%, the two main power switches are not on simultaneously at any time, and, if the sum of the duty cycles of the main power switches is greater than or equal to 100%, the two main power switches are not off simultaneously at any time, so as to reduce or minimise the ripple current in the capacitor bank (9).

2. A controller as claimed in Claim 1, in which the control means is arranged to turn on one of the main power switches in each cycle at the same instant that the other main power switch is turned off.

3. A controller as claimed in Claim 2, in which the control means is arranged to turn on the said one of the main power switches at a predetermined frequency, the duty cycle of the main power switch being controlled by controlling the instants at which it is turned off, whilst the other main power switch is turned off at the said predetermined frequency, the duty cycle of the other main power switch being controlled by controlling the instants at which it is turned on.

4. A controller as claimed in any preceding claim, in which the capacitor bank has a capacitance substantially equal to that required for a capacitor bank operating with only one of the motors, or with that one of the motors which requires a capacitor bank having the greater capacitance.

5. A controller as claimed in any preceding claim in which the main power switches, control means and capacitor bank are mounted in a common housing.

6. A controller as claimed in any preceding claim for independently controlling a traction motor and a hydraulic pump motor of a fork lift truck.

## Patentansprüche

1. Eine Hochfrequenz-Choppersteuereinheit, um zwei Elektromotoren (1, 2) unabhängig zu steuern, umfassend einen gesonderten Hauptstromversorgungsschalter (6, 7) für jeden Motor, wobei jeder Hauptstromversorgungsschalter in Reihe zwischen den zugeordneten Motor und eine elektrische Strom- bzw. Spannungsversorgung (3) geschaltet ist, ein Steuermittel (8), um jeden Hauptstromversorgungsschalter an- und auszuschalten und um den Arbeitszyklus von jedem Hauptstromversorgungsschalter zu steuern, um dadurch die an den zugeordneten Motor angelegte mittlere Spannung zu steuern, wobei die Steuereinheit eine einzelne Kondensatorbank (9) umfaßt, die im Einsatz parallel zur Versorgung (3) geschaltet ist, dadurch gekennzeichnet, daß das Steuermittel (8) ausgelegt ist, um die Hauptstromversorgungsschalter (6, 7) so zu betätigen, daß, falls die Summe der Tastgrade der zwei Hauptstromversorgungsschalter kleiner oder gleich 100 % ist, die zwei Hauptstromversorgungsschalter zu jedem beliebigen Zeitpunkt nicht gleichzeitig an sind, und daß, falls die Summe der Arbeitszyklen der Hauptstromversorgungsschalter größer oder gleich 100 % ist, die zwei Hauptstromversorgungsschalter zu jedem beliebigen Zeitpunkt nicht gleichzeitig aus sind, um so den Welligkeitsstrom in der Kondensatorbank (9) zu verringern oder zu minimieren.

2. Steuereinheit nach Anspruch 1, bei der das Steuermittel ausgelegt ist, um in jedem Zyklus einen der Hauptstromversorgungsschalter zum selben Zeitpunkt anzuschalten, zu dem der andere Hauptstromversorgungsschalter ausgeschaltet wird.

3. Steuereinheit nach Anspruch 2, bei der das Steuermittel ausgelegt ist, um den einen der Hauptstromversorgungsschalter mit einer vorbestimmten Frequenz anzuschalten, wobei der Arbeitszyklus des Hauptstromversorgungsschalters dadurch gesteuert wird, daß die Zeitpunkte gesteuert werden, zu denen dieser ausgeschaltet ist, während der andere Hauptstromversorgungsschalter mit der vorbestimmten Frequenz ausgeschaltet wird, wobei der Arbeitszyklus des anderen Hauptstromversorgungsschalters dadurch gesteuert wird, daß die Zeitpunkte gesteuert werden, zu denen dieser angeschaltet wird.

4. Steuereinheit nach einem der vorherigen Ansprüche, bei der die Kondensatorbank eine Kapazität aufweist, die im wesentlichen gleich derjenigen ist, die für eine Kondensatorbank erforderlich ist, die mit nur einem der Motoren arbeitet, oder mit dem einen der Motoren, der eine Kondensatorbank erfordert, welche die größere Kapazität aufweist.

5. Steuereinheit nach einem der vorhergehenden Ansprüche, bei der die Hauptstromversorgungsschalter, das Steuermittel und die Kondensatorbank in ein gemeinsames Gehäuse eingebaut sind.

6. Steuereinheit nach einem der vorhergehenden Ansprüche, um einen Traktions- bzw. Zugmotor und einen Hydraulikpumpenmotor eines Gabelstaplers unabhängig zu steuern.

## Revendications

1. Régulateur-hacheur haute fréquence pour la commande indépendante de deux moteurs électriques (1,2) comprenant un commutateur électrique principal séparé (6,7) pour chaque moteur, chaque commutateur électrique principal étant monté en série entre le moteur concerné et une source de puissance électrique (3), des moyens de commande (8) pour ouvrir et fermer chaque commutateur électrique principal et pour commander le cycle de service de chaque commutateur électrique principal afin de réguler la tension moyenne appliquée au moteur concerné, le régulateur comprenant une seule batterie de condensateur (9) connecté dans l'utilisation à la source (3), caractérisé en ce que les moyens de commande (8) sont aptes à actionner les commutateurs électriques principaux (6,7) afin que, si la somme des cycles de travail des deux commutateurs électriques principaux est inférieure ou égale à 100 %, les deux commutateurs électriques principaux, ne sont pas ouverts simultanément à un quelconque moment, et si la somme des cycles de travail des commutateurs électriques principaux est supérieure ou égale à 100 %, les deux commutateurs électriques principaux ne sont pas fermés simultanément à un quelconque moment de façon à réduire ou minimiser le courant ondulatoire dans la batterie de condensateur (9).

2. Régulateur selon la revendication 1, dans lequel les moyens de commande sont aptes à ouvrir les commutateurs électrique principaux dans chaque cycle au même instant que l'autre commutateur électrique principal est fermé.

3. Régulateur selon la revendication 2, dans lequel les moyens de commande sont aptes à ouvrir l'un des commutateurs électriques principaux à une fréquence prédéterminée, le cycle de travail du commutateur électrique principal étant régulé par le contrôle des instants auxquels il est fermé, tandis que l'autre commutateur électrique principal est fermé à la fréquence prédéterminée, le cycle de travail de l'autre commutateur électrique principal étant régulé par le contrôle des instants auxquels il est ouvert.

4. Régulateur selon l'une quelconque des revendications précédentes, dans lequel la capacitance de la batterie de condensateur est sensiblement égale à celle nécessaire pour une batterie de condensateur fonctionnant avec l'un des moteurs, ou avec celui des moteurs qui nécessite une batterie de condensateur ayant la plus grande capacitance.

5. Régulateur selon l'une quelconque des revendications précédentes, dans lequel les commutateurs électriques principaux, les moyens de commande et la batterie de condensateur sont montés dans un logement commun.

6. Régulateur selon l'une quelconque des revendications précédentes, pour commander indépendamment un moteur de traction et un moteur de pompe hydraulique d'un chariot élévateur à fourche.
